# EUROPÄISCHE PATENTSCHRIFT

(11) **EP 2 815 919 B1**
(45) Veröffentlichungstag und Bekanntmachung des Hinweises auf die Patenterteilung: **12.07.2017**
(21) Anmeldenummer: 14170556.6
(22) Anmeldetag: 30.05.2014
(51) Int. Cl.: B60P 7/08

(54) **Gurtspanner**
Belt tensioner
Tendeur de sangle

(30) Priorität: 18.06.2013 DE 202013102606 U; 15.05.2014 DE 202014102278 U
(43) Veröffentlichungstag der Anmeldung: 24.12.2014
(73) Patentinhaber: Franz Miederhoff oHG, 59846 Sundern (DE)
(72) Erfinder: Papenheim, Josef, D-59846 Sundern (DE); Miederhoff, Ralf, D-59846 Sundern-Langscheid (DE)
(74) Vertreter: Manske, Jörg

(56) Entgegenhaltungen:
- DE-A1-102009 020 239
- GB-A- 2 165 880
- US-A- 4 796 336
- US-A- 4 987 653
- US-A1- 2010 000 061

## Beschreibung

Die Erfindung betrifft Gurtspanner umfassend ein Seitenwangen aufweisendes Unterteil, einen daran schwenkbar angeschlossenen Spannhebel sowie eine Verriegelungseinrichtung zum Verriegeln des in seiner Geschlossen-Stellung befindlichen Spannhebels, welche Verriegelungseinrichtung über ein an der Innenseite des Spannhebels angeordnetes Federelement mit einem von dem Spannhebel in seiner Geschlossen-Stellung in Richtung zu der benachbarten Seitenwange des Unterteils abragenden Riegel sowie eine dieser Seitenwange zugeordnete Riegelfalle mit einer Riegelöffnung verfügt, in welche Riegelfalle der Riegel in der Geschlossen-Stellung des Gurtspanners eingreift und zum Blockieren einer Öffnungsbewegung des Spannhebels darin durch das Federelement gehalten ist.

Derartige Gurtspanner werden beispielsweise zum Spannen von Planen von Nutzfahrzeugaufbauten, wie etwa von Lastkraftwagen, von Sattelaufliegern oder von Eisenbahnwagons eingesetzt. Bekannt ist ein solcher Gurtspanner aus EP 0 906 732 A1. Der in diesem Dokument beschriebene Gurtspanner verfügt über ein zwei Seitenwangen aufweisendes Unterteil, das zumeist mittels Nieten mit geringem Abstand zum unteren Rand einer Plane angeschlossen ist. Schwenkbar an das Unterteil angelenkt ist ein Spannhebel. Der Spannhebel verfügt über abgekantete Seitenwangen und einen die Seitenwangen verbindenden Gurtsteg. Der Spannhebel ist mittels eines Gelenkbolzens an die beiden Seitenwangen des Unterteils angeschlossen. Auf dem Gelenkbolzen sitzt eine Hülse zur Gurtumlenkung. Zum Anschließen der zu spannenden Plane an ein fahrzeugseitiges Widerlager wird ein Gurt mit einem Haken zum Hintergreifen eines Widerlagers am Aufbau des Chassis an seinem einen Ende verwendet.

Die Verriegelungseinrichtung dieses vorbekannten Gurtspanners ist als federbelasteter Bügel ausgebildet. Dieser Bügel umfasst eine die beiden Seitenwangen verbindende Leiste, die in der verriegelnden Stellung das freie Ende des Spannhebels übergreift. Gehalten wird der Bügel durch eine Schraubenfeder in seiner den Spannhebel verriegelnden Stellung. Da der geschlossene Spannhebel an seinem freien Ende von der Leiste des Bügels der Verriegelungseinrichtung überdeckt ist, kann nicht die gesamte Länge des Spannhebels zum Verschwenken desselben gegenüber dem Unterteil zum Spannen des Gurtes bzw. der Seitenplane eines Nutzfahrzeugaufbaus genutzt werden, zumindest nicht beim Verriegeln des Spannhebels. Um dennoch eine ausreichende Hebelwirkung bereitzustellen, ist es notwendig, den Spannhebel und damit den gesamten Gurtspanner mit einer entsprechenden Länge zu versehen. Es ist jedoch gewünscht, derartige Gurtspanner, insbesondere wenn diese zum Spannen von Seitenplanen von Nutzfahrzeugaufbauten eingesetzt werden bezüglich ihrer Länge kürzer und somit kompakter auszubilden. Überdies wirken kompaktere, im Bereich des unteren Abschlusses einer Seitenplane angeordnete Gurtspanner gefälliger.

Aus DE 10 2009 020 239 A1 ist ein weiterer Gurtspanner mit einer Verriegelungseinrichtung bekannt. Beim Gegenstand dieses Dokumentes ist der Riegel Teil einer Federstange, die an der Innenseite des Spannhebels angeordnet ist. Die Federstange ist in oder an einer Seitenwange des Spannhebels festgelegt. Eingearbeitet ist in die Federstange eine klein dimensionierte Federschleife, um dem Federelement die notwendige Vorspannung zu verleihen. Die Federstange quert die Innenseite des Spannhebels und durchgreift mit ihrem, den Riegel bildenden Ende, die Seitenwange des Spannhebels, die derjenigen Seitenwange gegenüberliegt, an der das Federelement festgelegt ist. In dieser Seitenwange ist der Riegel in einer langlochartigen Führung geführt. Die Riegelfalle ist durch eine in die zu dem Riegel des Federelementes benachbarte Seitenwange eingebrachte Einrastnut gebildet. Der Riegel ist mit einer Länge ausgeführt, dass dieser seitlich aus der Riegelfalle herausragt, so dass dieses Ende als Betätigungshandhabe zum Bewirken einer Entriegelung genutzt werden kann. Damit bildet der Riegel zugleich die Betätigungshandhabe. Dieses Dokument offenbart auch eine Ausgestaltung, bei der die die Innenseite des Spannhebels querende, gerade ausgeführte Federstange zum Ausbilden einer Gurtschlaufe genutzt wird. Es ist dann möglich, durch Ziehen an der Gurtschlaufe den Spannhebel zu entriegeln. Aus diesem Grunde kann die Federschleife nur klein dimensioniert werden. Zudem ist es erforderlich, dass die Federstange mit entsprechendem Abstand zur Innenseite des Spannhebels angeordnet ist.

Auch wenn bei dem aus DE 10 2009 020 239 A1 bekannt gewordenen Gurtspanner die Verriegelungseinrichtung einfacher ausgeführt ist als in dem aus EP 0 906 732 A1 bekannt gewordenen Gurtspanner, wäre es wünschenswert, wenn die Handhabung vereinfacht wäre. Bei einer Benutzung des Riegels zum Öffnen des Gurtspanners gemäß DE 10 2009 020 239 A1 ist dieses praktisch nur mit einer Zwei-Hand-Betätigung möglich, wenn eine Entriegelung durch Betätigung des Riegels vorgenommen werden soll. Zwar kann ein einhändiges Öffnen des Gurtspanners vorgenommen werden, wenn, wie vorbeschrieben, eine um die Federstange gebildete Gurtschlaufe bereitgestellt worden ist. Hierfür wird das freie Gurtende verwendet. Dieses wird jedoch zunächst dafür benötigt, den Gurt zu straffen, bevor der Spanner betätigt wird. Daher kann die für die einhändige Entriegelung notwendige Schlaufe erst gebildet werden, wenn der Gurt zuvor gestrafft worden ist. Ein Straffen des Gurtes mit bereits gebildeter Schlaufe ist nicht vernünftig möglich. Das nachträgliche Ausbilden der Schlaufe ist zeitaufwendig, vor allem wenn man bedenkt, dass zum Schließen einer Seitenplane eines Sattelaufliegers etwa 30 Gurtspanner zu betätigen sind.

Ausgehend von diesem diskutierten Stand der Technik liegt der Erfindung daher die Aufgabe zugrunde, einen eingangs genannten Gurtspanner dergestalt weiterzubilden, dass dieser insbesondere hinsichtlich seiner Handhabung vereinfacht ist.

Gelöst wird diese Aufgabe erfindungsgemäß durch einen eingangs genannten, gattungsgemäßen Gurtspanner, bei dem das Federelement eine an der Innenseite des Spannhebels über dessen freien, der Anlenkung des Spannhebels am Unterteil gegenüberliegenden Ende hervorstehende Handhabe zum Verstellen des Riegels aus der Riegelfalle in die Riegelöffnung gegen die Kraft des Federelementes aufweist.

Bei diesem Gurtspanner verfügt das Federelement über eine Handhabe, die an der Innenseite des Spannhebels über dessen freien, der Anlenkung des Spannhebels am Unterteil gegenüberliegenden Ende hervorsteht. Damit ist die Handhabe von dem Riegel beabstandet, womit bei diesem Gurtspanner eine funktionale Trennung zwischen den Funktionalitäten "Riegel" und "Handhabe" bei dem Federelement vorgesehen ist. Die sich durch dieses Konzept einstellenden Vorteile ergeben sich aus den nachfolgenden Ausführungen.

Vorzugsweise ist die Verriegelungseinrichtung ausgelegt, damit eine Entriegelung des Spannhebels gegenüber dem Unterteil durch eine Drück-Betätigung (Push-Betätigung) herbeigeführt werden kann. Insofern wird durch eine Betätigung des Federelementes der in der Geschlossen-Stellung des Gurtspanners in der Riegelfalle festgesetzte Riegel des Spannhebels in die Riegelöffnung hinein verstellt, so dass dann der Spannhebel aufgeschwenkt werden kann. Je nach Konzeption des Gurtspanners kann dieses selbsttätig unter Ausnutzung der in dem gespannten Gurt gespeicherten Energie erfolgen. Die Konzeption, die Handhabe an der Innenseite des Spannhebels über dessen freien Ende hervorstehend anzuordnen, erlaubt ohne Weiteres eine Einhand-Bedienung der Handhabe zum Öffnen des Gurtspanners. Begründet liegt dies darin, dass sich die Handhabe im Bereich der Mitte des Spannhebels in Bezug auf seine Längserstreckung befindet und daher der Gurtspanner beim Öffnen nicht zusätzlich festgehalten werden muss. Überdies kann eine solche Einhand-Bedienung auch derart vorgenommen werden, dass der Spannhebel gehalten wird, während die Handhabe mit dem Daumen derselben Hand zum Öffnen des Gurtspanners betätigt wird. Von Vorteil ist des weiteren, dass der in die Riegelfalle eingreifende Riegel nur eine solche Länge aufzuweisen braucht, dass dieser sicher in der Riegelfalle gehalten ist. Insofern braucht der Riegel bei einer erfindungsgemäßen Ausgestaltung des Gurtspanners in der Geschlossen-Stellung desselben nur unwesentlich von der die die Riegefalle sowie die Riegelöffnung bereitstellenden Seitenwange des Unterteils hervorragen. Auch dieses wirkt sich positiv auf eine vereinfachte Handhabung des Gurtspanners aus, da dann nicht die Gefahr besteht, dass Gegenstände daran hängen bleiben.

Die mit dem erfindungsgemäßen Konzept bereitgestellte Möglichkeit, eine Entriegelung des Gurtspanners durch eine Push-Betätigung der Handhabe auszulösen, gestattet es, dass dieses unter Zuhilfenahme des freien Gurtendes ohne zuvorige Ausbidlung einer Schlaufe vorgenommen werden kann. Dieses wird ergriffen und vom Unterteil wegbewegt, sodass ein Abschnitt des Gurtes an die Handhabe des Spannhebels herangeführt wird. Als Folge einer solchen Bewegung wird die Handhabe durch den daran herangeführten oder herangeschlagenen Gurt zum Entriegeln des Gurtspanners bewegt. Von Vorteil ist nicht nur die Handhabung, sondern auch die mögliche flacher bauende Auslegung des Gurtspanners. Schließlich kann bei dem erfindungsgemäßen Gurtspanner das Federelement unmittelbar anliegend an der Innenseite des Gurtspanners gehalten sein.

Die Handhabe ist gemäß einem bevorzugten Ausführungsbeispiel ein Abschnitt des Federelementes selbst. Grundsätzlich ist es auch möglich, eine Handhabe an das eigentliche Federelement anzuschließen.

Bei einer Ausgestaltung, bei der die Handhabe ein Abschnitt des Federelementes selbst ist, ist vorgesehen, das Federelement U-förmig auszuführen, wobei die beiden Schenkel abschnittsweise etwa parallel zu den Seitenwangen des Spannhebels verlaufen und der die Schenkel verbindende Abschnitt, typischerweise ebenfalls gebogen, insgesamt oder zumindest teilweise die über das freie Ende des Spannhebels hervorstehende Handhabe bildet.

Die vorbeschriebene Anordnung des Federelementes unmittelbar an der Innenseite des Spannhebels, typischer Weise an der Innenseite seiner Handhabungslasche, ermöglicht auch die Ausbildung von Führungen für das Federelement in einfacher Art und Weise. Diese können unter Freilassung einer U-förmigen Aufnahme für einen Abschnitt des Federelementes durch nach innen weisende, an den Spannhebel angeformte Abkantungen gebildete sein.

Gemäß einer bevorzugten Ausgestaltung ist vorgesehen, dass das Federelement nur einen Riegel trägt, auch wenn grundsätzlich Möglichkeit besteht, dass das Federelement zwei Riegel aufweist, wobei in einem solchen Fall jeweils einer Seitenwange des Spannhebels bzw. des Unterteils ein Riegel und sodann dem Unterteil in jeder Seitenwange eine Riegelfalle zugeordnet sind. Bei der Konzeption eines Federelementes mit nur einem Riegelelement ist gemäß einem Ausführungsbeispiel vorgesehen, dass dieses innenseitig bezüglich der dem Riegel gegenüberliegenden Seitenwange des Spannhebels und mit Abstand zu dieser festgelegt ist. Zu diesem Zweck verfügt der Spannhebel über eine Federelementhalterung, die beispielsweise durch eine aus der Seitenwange des Spannhebels nach innen ausgestellte Lasche bereitgestellt sein kann. Zum Fixieren des Endes des Federelementes verfügt eine solche Lasche über eine darin eingebrachte Federendaufnahme, in die das aus der Ebene der Federerstreckung abgewinkelte Federende eingreift. Die Federendaufnahme ist gemäß einer Ausgestaltung labyrinthartig ausgeführt und verfügt über eine Einsetzöffnung, über die das abgewinkelte Federende ohne weiteres in die Federendaufnahme eingesetzt werden kann.

Der Riegel des Federelementes, der vorzugsweise als ein abgewinkelter Abschnitt des Federelementes selbst ist, ist typischerweise in einer langlochartigen Führung in der der zur Festlegung des Federelementes gegenüberliegenden Seitenwange geführt. Die vorbeschriebene Ausbildung der Federelementhalterung und der lose Durchgriff des Riegels durch eine Seitenwange sowie die ggf. vorgesehenen Führungen, in denen das Federelement geführt und nicht fixiert ist, erlauben eine sehr einfache Montage des Federelementes an dem Spannhebel. Dabei werden nur die durch das Federelement selbst bereitgestellten Federkräfte genutzt, ohne das Federelement selbst einer Torsionsbeanspruchung zu unterwerfen. Da das Federelement bei einer solchen Ausgestaltung aufgrund seiner eigenen Federkraft an dem Spannhebel gehalten ist, bedarf es nach einer Montage des Federelementes keiner zusätzlichen Prozessschritte, das Federelement an dem Spannhebel festzusetzen. Insofern werden bei einer solchen Ausgestaltung in geschickter Weise die durch das Federelement bereitgestellten Kräfte auch zu seiner Halterung genutzt.

Ist der Gurtspanner als Übertotpunktspanner ausgelegt, was gemäß einem Ausführungsbeispiel der Fall ist, erlaubt die besonders einfache Montage des Federelementes die Möglichkeit, den Gurtspanner mit und ohne Federelement ausliefern und vor allem auch anwenden zu können. Auch ist es möglich, den ohne Federelement ausgerüsteten Gurtspanner mit mitgelieferten Federelementen auszuliefern. Sodann kann nutzerseitig ein und derselbe Gurtspanner, falls gewünscht, auch mit einer nachträglich eingebrachten Verriegelung benutzt werden. Im letzteren Falle muss nur das Federelement an der Innenseite des Spannhebels montiert werden.

Zum Verhindern einer unerwünschten Gurtlockerung verfügt der Gurt-spanner in einer seiner möglichen Ausgestaltungen über zwei Gurtumlenkungen, wobei eine erste Gurtumlenkung durch einen quer verlaufenden Steg des Spannhebels und eine zweite Gurtumlenkung im Unterteil vorgesehen sind. Die beiden Gurtumlenkungen sind in Längserstreckung des Gurtspanners in seiner Geschlossen-Stellung voneinander beabstandet, wobei die Gurtumlenkung des Unterteils von der Gurtumlenkung des Spannhebels in Richtung seiner Schwenkachse von der Gurtumlenkung des Spannhebels beabstandet ist. Zur Bereitstellung einer besonders effektiven Verhinderung einer Gurtlockerung ist die dem Unterteil zugeordnete Gurtumlenkung als ein in dem von den Seitenwangen eingefassten Raum befindlicher und gegenüber dem Bodenteil geneigt angeordneter Steg ausgeführt ist, wobei eine Kante des von der ersten Gurtumlenkung wegweisenden Seite dieses Steges in der Geschlossen-Stellung des Spannhebels ein Widerlager bildet, gegen die die um den Umlenksteg des Spannhebels herum geführte Gurtschlaufe mit ihren beiden Gurtabschnitten übereinander liegend gespannt wird. In Folge dieser Neigung des Umlenksteges wirkt auf die Gurtschlaufe eine, entgegen der Spannrichtung weisende Kante des von der Gurtumlenkung des Spannsteges wegweisenden Seite dieses Umlenksteges. Die Gurtumlenkung beim Unterteil erfolgt somit an der entgegen der Spannrichtung weisenden Kante, so dass auf die daran umgelenkten, übereinander liegenden Gurtabschnitte der Gurtschlaufe die mit der über den Spannhebel auf den Gurt einwirkenden Spannkraft wirkt, wobei die anliegende Spannkraft auf eine Kante des Umlenksteges konzentriert wird.

Gesteigert werden kann eine Gurthemmung in der beschriebenen Art und Weise, wenn der Umlenksteg des Unterteils gegenüber der Ebene des Bodenteils mit einem Winkel von zumindest 30 Grad geneigt ist, wobei dieser Anstellwinkel nicht mehr als 75 Grad betragen sollte. Gemäß einem besonders bevorzugten Ausführungsbeispiel liegt der Anstellwinkel zwischen 55 Grad und 65 Grad. Bei einer solchen Anstellung des Umlenksteges ist eine Kraftkonzentration auf die entgegen der Spannrichtung weisende Kante des freien Endes desselben besonders effektiv.

Der Umlenksteg des Unterteils ist zweckmäßigerweise eine Ausstanzung aus dem Bodenteil des Unterteils, so dass für die Ausbildung der Funktionalität einer Verhinderung einer Gurtlockerung keine zusätzlichen Teile benötigt werden. Der Umlenksteg des Unterteils bildet sodann eine Abkantung des Bodenteils.

Die für die Gurthemmung dienende Kante des Umlenksteges des Unterteils kann gerade ausgeführt sein. Durchaus möglich ist es auch, diese mit Vorsprüngen zu versehen, so dass diese Kante gewellt oder zackig ausgeführt sein kann. Gurtspanner, die häufig bei ihrer Anwendung betätigt werden müssen, wird man vorzugsweise mit einer Kantengeometrie bezüglich der als Widerlager dienenden Kante des Umlenksteges des Unterteils ausstatten, dass der Gurt ohne Gurtbeschädigungen zu seiner Längeneinrichtung darüber hinweg gezogen werden kann. Bei einer solchen Ausgestaltung kann eine Steigerung der Gurtklemmkraft bereits durch eine leichte Wellung erzielt werden. Es versteht sich hierbei, dass die entgegen der Spannrichtung weisenden Scheitel eine weitere Kraftkonzentration auf die daran zu spannenden Gurte haben. Bereits eine konvexe Ausführung der als Widerlager dienenden Kante oder auch der gesamten Umlenkseite des Umlenksteges des Unterteils vermag eine solche Steigerung zu bewirken.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: eine perspektivische Darstellung eines Gurtspanners gemäß der Erfindung in seiner Geschlossen-Stellung,
- **Fig. 2:**: der Spannhebel des Gurtspanners der Figur 1 mit Blick auf seine Innenseite,
- **Fig. 3:**: eine Draufsicht auf die Innenseite des Spannhebels des Gurtspanners der Figur 1,
- **Fig. 4:**: eine vergrößerte Stirnseitenansicht des Spannhebels,
- **Fig. 5:**: eine perspektivische Darstellung des Unterteils des Gurtspanners der Figur 1,
- **Fig. 6:**: eine Längsschnittdarstellung durch einen Abschnitt des Spannhebels des Gurtspanners der Figur 1 mit einem schematisiert darin eingezeichneten freien Gurtende,
- **Fig. 7:**: einen Längsschnitt durch einen Gurtspanner gemäß einer weiteren Ausgestaltung im Bereich seiner Mittellängsachse und
- **Fig. 8:**: der Gurtspanner der Figur 7 mit einem eingefädelten, gespannten Gurt.

Ein Gurtspanner 1 dient zum Spannen eines Gurtes, der seinerseits beispielsweise an die Seitenplane eines Nutzfahrzeugaufbaus angeschlossen ist. Mit einer Vielzahl derartiger Gurtspanner kannsodann die Seitenplane gegenüber der Bodengruppe des Nutzfahrzeugaufbaus verspannt werden.

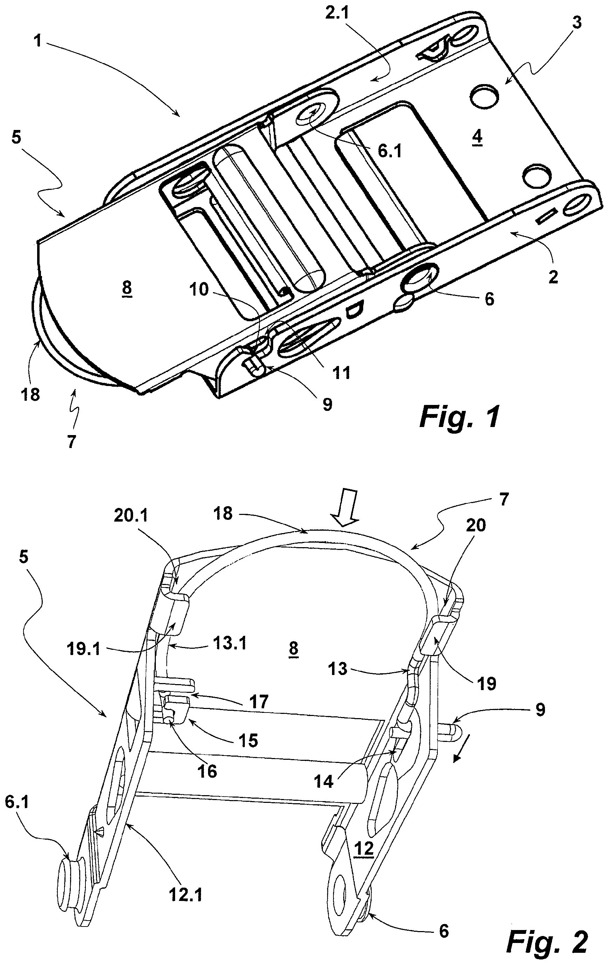

Der Gurtspanner 1 verfügt über ein zwei Seitenwangen 2, 2.1 aufweisendes Unterteil 3. Das Unterteil 3 ist transparent in der Figur 1 gezeigt. Die Seitenwangen 2, 2.1 fassen zusammen mit einem Bodenteil 4 eine Gurtaufnahme ein. An den Seitenwangen 2, 2.1 ist ein Spannhebel 5 schwenkbar angelenkt. Bei dem dargestellten Ausführungsbeispiel ist die gelenkige Anordnung des Spannhebels 5 gegenüber dem Unterteil 3 durch entsprechende Bohrungen in den Seitenwangen 2, 2.1 des Unterteils 3 durchgreifende Nietdurchzüge 6, 6.1 des Spannhebels 5 ausgeführt. Der Spannhebel 5 ist in seiner in Figur 1 gezeigten Geschlossen-Stellung gegenüber dem Unterteil 3 verriegelt. Zu diesem Zweck verfügt der Gurtspanner 1 über eine Verriegelungseinrichtung. Die Verriegelungseinrichtung umfasst ein Federelement 7, das an der Innenseite der Handhabungslasche 8 des Spannhebels 5 angeordnet ist. Bei dem Federelement 7 handelt es sich um einen gebogenen Draht aus einem Federstahl. Bei dem dargestellten Ausführungsbeispiel ist die Querschnittsgeometrie des Federelementes 7 rund. Das Federelement 7 trägt einen Riegel 9, der zum Herbeiführen der verriegelten Stellung des Spannhebels 5 gegenüber dem Unterteil 3 in eine Riegelfalle 10 der Seitenwange 2 des Unterteils 3 eingreift. In dieser Stellung sitzt der Riegel 9 in der Riegelfalle 10, wodurch eine Öffnungsbewegung des Spannhebels 5 blockiert ist. Gehalten ist der Riegel 9 in dieser Stellung durch die in dem Federelement 7 gespeicherte Federkraft. Geöffnet werden kann der Gurtspanner 1, wenn der Riegel 9 gegen die Kraft des Federelements 7 aus der Riegelfalle 10 heraus und in die Riegelöffnung 11 hinein bewegt worden ist. Durch die Riegelöffnung 11 ist ein Durchbruch zu dem in Figur 1 gezeigten oberen Rand der Seitenwange 2 geschaffen. Befindet sich der Riegel 9 in der Riegelöffnung 11 kann der Spannhebel 5 gegenüber dem Unterteil 3 aufgeschwenkt werden.

Die Verriegelungseinrichtung des Gurtspanners 1 ist nachfolgend anhand der Figuren 2 bis 6 näher beschrieben.

Figur 2 zeigt den Spannhebel 5 in einer perspektivischen Ansicht auf seine Innenseite und somit auf die Innenseite seiner Handhabungslasche 8. Der Spannhebel 5 verfügt über zwei zu dem Unterteil 3 weisende Seitenwangen 12, 12.1. Diese sind, wie auch aus Figur 1 erkennbar, aus der Ebene des Spannhebels 5 abgekantet. Die Seitenwangen 12, 12.1 weisen im Bereich des Endes der Handhabungslasche 8 noch eine reduzierte Höhe auf.

Das Federelement 7 des dargestellten Ausführungsbeispiels ist U-förmig ausgeführt. Der Riegel 9 bildet eine von dem einen Schenkel 13 des U-förmigen Federelementes 7 nach außen gerichtete Abkantung. Der Riegel 9 durchgreift die Seitenwange 12 des Spannhebels 5 in einer langlochartigen Führung 14. In dieser ist der Riegel 9 translatorisch - wie durch den Pfeil in Figur 2 angedeutet - bewegbar, wobei seine in Figur 2 gezeigte Stellung der in Figur 1 gezeigten Verriegelungsstellung entspricht. Der dem Schenkel 13 gegenüberliegende Schenkel 13.1 des Federelementes 7 ist mit Abstand von der Seitenwange 12.1 und innenseitig zu dieser in einer Federelementhalterung 15 gefangen. Zu diesem Zweck ist das freie Ende des Schenkels 13.1 aus der der Ebene der Handhabungslasche 8 entsprechenden Ebene des Federelementes 7 abgewinkelt. Dieses zum Halten des Federelementes 7 vorgesehene Endstück ist in Figur 2 mit dem Bezugszeichen 16 gekennzeichnet. Die Federelementhalterung 15 verfügt über eine Einsetzöffnung 17, durch die das Endstück 16 des Federelementes 7 ohne weiteres in die Federelementhalterung 15 und in die durch diese gebildete Falle eingesetzt werden kann. Der die beiden Schenkel 13, 13.1 verbindende Abschnitt des Federelementes 7 ist gebogen ausgeführt und tritt an der Unterseite der Handhabungslasche 8 über das freie Ende derselben hervor, wie auch aus Figur 1 erkennbar. Dieser hervortretende Abschnitt des Federelementes 7 dient als Handhabe 18. Im Bereich der Schenkel 13, 13.1 ist das Federelement an der Innenseite der Handhabungslasche 8 geführt. Diesem Zweck dienen zwei nach innen abgekantete Laschen 19, 19.1, durch die jeweils eine U-förmige Führung 20, 20.1 bereitgestellt ist. In diese, an ihrem zueinander weisenden Seiten offenen Führungen 20, 20.1 greift das Federelement 7 ein und ist darin translatorisch bewegbar. Wird die Handhabe 18 gegenüber der Handhabungslasche 18 bzw. den Spannhebel 5 eingedrückt und somit in Richtung zur Handhabungslasche 8 bewegt, resultiert dieses in einer translatorischen Bewegung des Riegels 9 in seiner Führung 14 (durch einen Pfeil in Figur 2 angedeutet). Durch diese Bewegung wird der Riegel 9 aus seiner in die Riegelfalle 10 eingreifenden Stellung herausgebracht. Somit dient eine Betätigung der Handhabe 18 des Federelementes 7 dem Zweck, die Verriegelung des Gurtspanners 1 zu lösen, wenn dieser geöffnet werden soll.

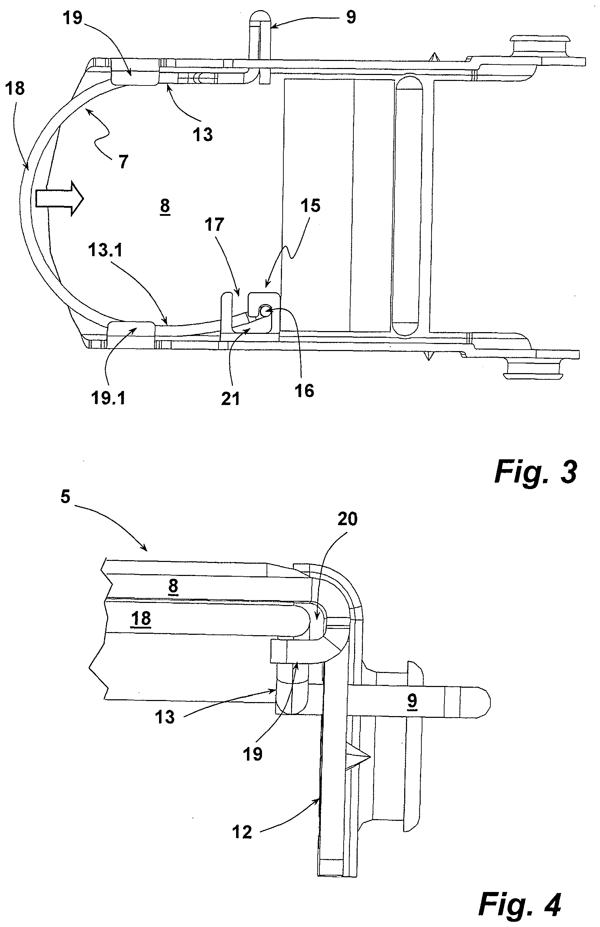

Die Auslegung des Federelementes 7 mit seiner Handhabe 18, die bei dem dargestellten Ausführungsbeispiel ein Abschnitt des Federelementes 7 selbst ist, ist aus Figur 3 deutlicher zu erkennen. Diese Innenansicht auf die Handhabungslasche 8 des Spannhebels 5 verdeutlicht zudem, dass keiner der Schenkel 13, 13.1 an der Innenwandung der Seitenwangenfortsätze anliegt. Erkennbar ist auch die Ausgestaltung der Federelementhalterung 15 bzw. der darin eingebrachten Federelementaufnahme 21, in der das Endstück 16 unter Ausnutzung der durch das Federelement 7 bereitgestellten Feder gefangen und gehalten ist. Die Federendaufnahme 21 ist ausgehend von seiner Einsetzöffnung 17 labyrinthartig konzipiert, damit das Endstück 16 sicher darin gehalten ist.

Das Federelement 7 ist mit Spiel in den Führungen 20, 20.1 und mit Abstand zu den Seitenwangenfortsätzen des Spannhebels 5 gehalten, wie die vergrößerte Stirnseitenansicht des Spannhebels 5 der Figur 4 verdeutlicht.

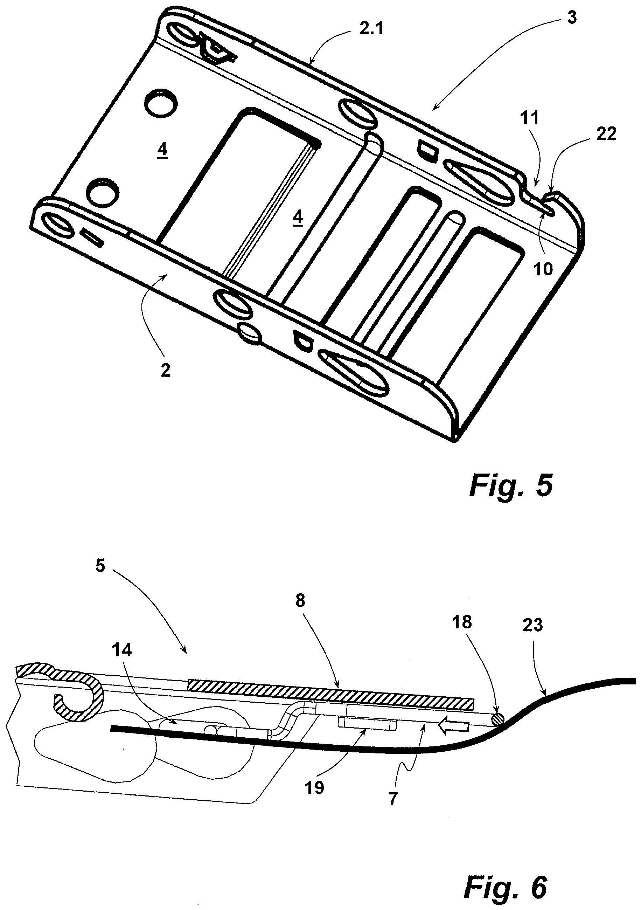

Figur 5 zeigt das Unterteil 3 mit ausgeblendetem Spannhebel. Von Interesse bei dem Unterteil 3 ist die Konzeption der Riegelfalle 10, in die der Riegel 9 des Federelementes 7 des Spannhebels 5 in der Geschlossen-Stellung des Spanngurtes 1 eingreift. Die Riegelöffnung 11 ist durch eine Stellschräge 22 begrenzt, auf die der Riegel 9 zum Verriegeln des Spannhebels 5 an dem Unterteil 3 aufläuft. Beim Auftreffen des Riegels 9 auf die Stellschräge 22 wird dieser gegen die Rückstellkraft des Federelementes 7 in Richtung zur Riegelöffnung 11 hin bewegt, so dass dieser nach Passieren derselben selbsttätig in die Riegelfalle 10 einspringt, was wiederum durch die Federkraft des Federelementes 7 bewirkt wird.

In dem in Figur 6 gezeigten Längsschnitt durch einen Teil des Spannhebels 5 im Bereich seiner Handhabungslasche 8 ist schematisiert das freie Ende eines Gurtes 23 eingezeichnet und in eine Stellung gebracht worden, in der dieser zur Anlage an der Handhabe 18 des Federelementes 7 gebracht worden ist. Diese Darstellung lässt erkennen, dass durch Anheben bzw. Ziehen des Gurtendes 23 die Handhabe 18 zum Lösen der Verriegelung an dem Unterteil, wie durch den Blockpfeil kenntlich gemacht, betätigt werden kann.

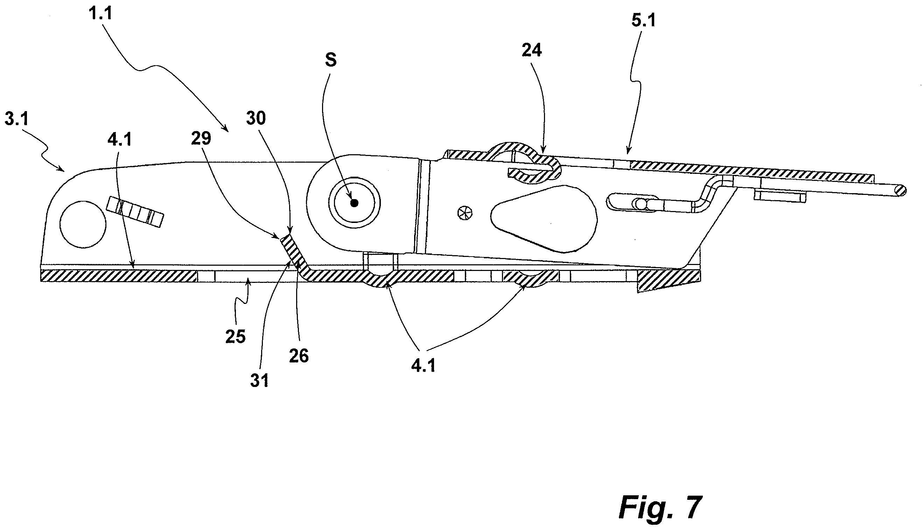

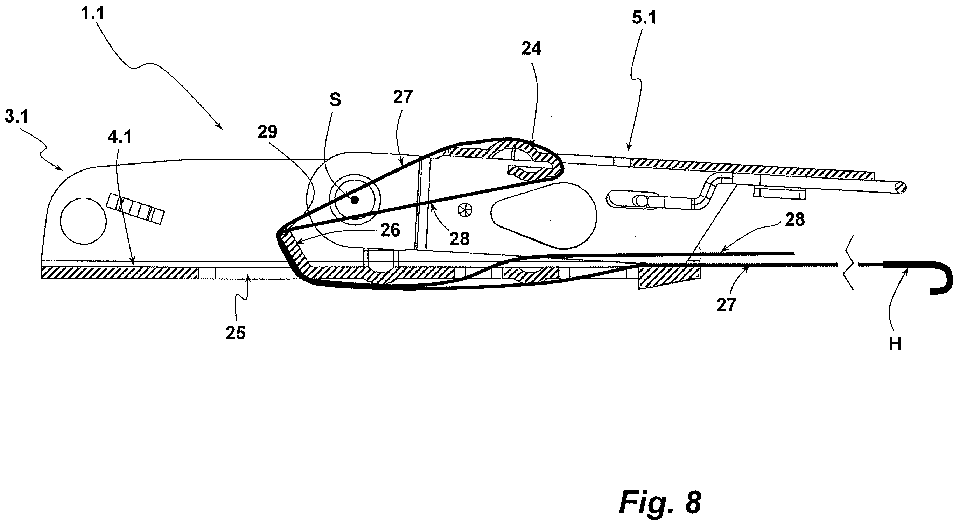

Figuren 7 und 8 zeigen einen Gurtspanner 1.1, der prinzipiell aufgebaut ist wie der Gurtspanner 1 der Figuren 1 bis 6. Daher gelten die zu der Verriegelung des Spannhebels 5 des Gurtspanners 1 gemachten Ausführungen gleichermaßen für den Gurtspanner 1.1. Der Gurtspanner 1.1 unterscheidet sich von dem vorstehend beschriebenen Gurtspanner 1 dadurch, dass dieser zum Bereitstellen einer besonders wirksamen Verhinderung einer Gurtlockerung, wenn gespannt, als Gurtumlenkung im Unterteil einen besonders ausgeführten Spannsteg aufweist, wie dieses nachstehend beschrieben ist, aus welcher Beschreibung sich auch die Gurtführung ergibt. In den Gurtspanner 1 des vorangegangenen Ausführungsbeispiels wird ein Gurt in gleicher Weise eingefädelt bzw. geführt.

Zum Anschließen eines Gurtes an den Gurtspanner 1.1 verfügt der Spannhebel 5.1 über eine Gurtumlenkung, die bei dem dargestellten Ausführungsbeispiel durch einen die Seitenwangen des Spannhebels 5.1 verbindenden Umlenksteg 24 bereitgestellt ist. Um den Umlenksteg 24 wird ein Gurtende des zu spannenden Gurtes herumgeführt, so dass der Umlenksteg 24 in einer Gurtschlaufe eingefasst ist. Herausgeführt werden die beiden Gurtenden aus dem Gurtspanner 1.1 durch eine in dem Bodenteil 4.1 befindliche Gurtöffnung 25. Die Gurtöffnung 25 wird in Richtung zu dem Spannhebel 5.1 hin von einer ebenfalls als Steg 26 ausgeführten Gurtumlenkung begrenzt. Die durch den Steg 26 bereitgestellte Gurtumlenkung des Unterteils 3.1 ist in der Geschlossen-Stellung des Spannhebels 5.1, wie in Figur 7 erkennbar, in Richtung der Schwenkachse S des Spannhebels 5.1 von dem Umlenksteg 24 des Spannhebels 5.1 beabstandet. Aus der Gurtöffnung 25 werden beide Gurtenden herausgeführt, und zwar werden diese um den Umlenksteg 26 umgelenkt, wie dieses aus der Schnittdarstellung erkennbar ist. An dem bezüglich dieser Umlenkung außen liegenden Gurtabschnitt 27 (s. Figur 8) befindet sich an seinem Ende ein Anschlussmittel, beispielsweise ein Haken H, mit dem der Gurt an ein Widerlager befestigt wird, bevor der Spannhebel 5.1 geschlossen wird. Zwischen diesem außen liegenden Gurtabschnitt 27 und dem Umlenksteg 26 befindet sich das lose Ende des zu spannenden Gurtes. In Figur 8 ist dieses mit dem Bezugszeichen 28 gekennzeichnet. An diesem Ende wird der Gurt durch manuelles Straffen desselben vorgespannt, bevor der Spannhebel 5.1 geschlossen wird.

Die Gurtumlenkung des Unterteils 3.1 wird nachstehend zunächst anhand der Längsschnittdarstellung durch den Gurtspanner 1 der Figur 7 erläutert. Der Umlenksteg 26 des dargestellten Ausführungsbeispiels ist aus dem Bodenteil 4.1 freigestanzt. Der freigestantze Abschnitt des Bodenteils 4.1 ist nach Ausbilden der Stanzschnitte in seine in Figur 7 gezeigte Stellung durch einen Abkantvorgang zur Ausbildung des Umlenksteges 26 gebogen worden. Bei dem dargestellten Ausführungsbeispiel beträgt der Kantwinkel α etwa 60 Grad. Durch die Abwinkelung des Umlenksteges 26 gegenüber der Ebene des Bodenteils 4.1 befindet sich die entgegen der Spannrichtung weisende Kante 29 des freien Endes des Umlenksteges 26 in einer Position, in der diese als Hemmkante besonders wirksam ist. Als Hemmkante ist die Kante 29 besonders wirksam, da über diese eine effektive Kraftkonzentration auf die umgelenkten Gurtabschnitte 27, 28 erfolgt, mithin über diese eine höhere Spannkraft auf die übereinander liegenden Gurtabschnitte 27, 28 wirkt als an der anderen Kante 30, durch die die Umlenkseite des Umlenksteges 26 eingefasst ist. Dieses ist in einem besonderen Maße der Fall, wenn der Winkel α der Abkantung so gewählt wird, dass die gewünschte Kraftkonzentration auf die Kante 29 durch die zweite Kante 30 des freien Endes des Umlenksteges 26 und die Unterseite 31 des Umlenksteges 26 möglichst wenig beeinträchtigt ist. Besonders effektiv ist eine Gurthemmung, wenn auf die übereinander liegenden Gurtabschnitte 27, 28 eine Spannkraft ausschließlich oder weitestgehend ausschließlich über die Kante 29 des Umlenksteges und nicht auch über die weitere Kante 30 desselben wirkt. Erreicht werden kann dieses durch einen Schrägschnitt des freien Endes des Umlenksteges 26, beispielsweise durch einen schräg ausgeführten Stanzschnitt.

Figur 8 zeigt die besondere Klemmwirkung der beiden Gurtabschnitte 27, 28 gegeneinander an der Hemmkante 29 des geneigten Umlenksteges 26 des Unterteils 3.1. Gurte, wie diese beispielsweise zum Spannen von Seitenplanen von Nutzfahrzeugen eingesetzt werden, sind typischerweise gewebt, weisen mithin eine Oberflächenstrukturierung auf. Beim Umlenken dieser übereinander liegenden Gurtabschnitte 27, 28 an der Hemmkante 29 werden diese Oberflächenstrukturierungen ineinander gedrückt, so dass in Folge der Spannung ein wirksamer Formschluss zwischen den beiden Gurtabschnitten 27, 28 gegeben ist und diese nicht mehr gegeneinander bewegt werden können. Dabei wird der Gurtabschnitt 27 gegen den Gurtabschnitt 28 gepresst. Die durch die besondere Kraftkonzentration bei dem Gurtspanner 1.1 in seiner Geschlossen-Stellung auf die übereinander liegenden Gurtabschnitte 27, 28 an dem Umlenksteg 26 des Unterteils 3.1 bewirkte Gurthemmung hält auch höchsten Beanspruchungen stand. Dieses begründet die besondere Sicherung, die bei dem Gurtspanner 1.1 in Bezug auf eine Gurtlockerung gegeben ist.

Die Erfindung ist anhand eines Ausführungsbeispiels beschrieben worden. Für einen Fachmann ergeben sich zahlreiche weitere Ausgestaltungen, die Erfindung im Umfange der geltenden Ansprüche verwirklichen zu können, die von dem dargestellten Ausführungsbeispiel abweichen können.

### Bezugszeichenliste

- 1, 1.1: Gurtspanner
- 2, 2.1: Seitenwange
- 3, 3.1: Unterteil
- 4, 4.1: Bodenteil
- 5, 5.1: Spannhebel
- 6, 6.1: Nietdurchzug
- 7: Federelement
- 8: Handhabungslasche
- 9: Riegel
- 10: Riegelfalle
- 11: Riegelöffnung
- 12, 12.1: Seitenwange
- 13, 13.1: Schenkel
- 14: Führung
- 15: Federelementhalterung
- 16: Endstück
- 17: Einsetzöffnung
- 18: Handhabe
- 19, 19.1: Lasche
- 20, 20.1: Führung
- 21: Federendaufnahme
- 22: Stellschräge
- 23: Gurtende
- 24: Umlenksteg
- 25: Gurtöffnung
- 26: Umlenksteg
- 27: Gurtabschnitt
- 28: Gurtabschnitt
- 29: Kante
- 30: Kante
- 31: Unterseite
- α: Kantwinkel
- H: Haken
- S: Schwenkachse

## Patentansprüche

1. Gurtspanner umfassend ein Seitenwangen (2, 2.1) aufweisendes Unterteil (3, 3.1), einen daran schwenkbar angeschlossenen Spannhebel (5, 5.1) sowie eine Verriegelungseinrichtung zum Verriegeln des in seiner Geschlossen-Stellung befindlichen Spannhebels (5, 5.1), welche Verriegelungseinrichtung über ein an der Innenseite des Spannhebels (5, 5.1) angeordnetes Federelement (7) mit einem von dem Spannhebel (5, 5.1) in seiner Geschlossen-Stellung in Richtung zu der benachbarten Seitenwange (2, 2.1) des Unterteils (3, 3.1) abragenden Riegel (9) sowie eine dieser Seitenwange (2, 2.1) zugeordnete Riegelfalle (10) mit einer Riegelöffnung (11) verfügt, in welche Riegelfalle (10) der Riegel (9) in der Geschlossen-Stellung des Gurtspanners (1) eingreift und zum Blockieren einer Öffnungsbewegung des Spannhebels (5, 5.1) darin durch das Federelement (7) gehalten ist, **dadurch gekennzeichnet, dass** das Federelement (7) eine an der Innenseite des Spannhebels (5, 5.1) über dessen freien, der Anlenkung des Spannhebels am Unterteil (3, 3.1) gegenüberliegenden Ende hervorstehende Handhabe (18) zum Verstellen des Riegels (9) aus der Riegelfalle (10) in die Riegelöffnung (11) gegen die Kraft des Federelementes (7) aufweist.

2. Gurtspanner nach Anspruch 1, **dadurch gekennzeichnet, dass** das Federelement (7) U-förmig gebogen, der Riegel (9) an einem freien Ende eines Schenkels (13) des Federelementes (7) nach außen ausgestellt ausgeführt und die Handhabe (18) ein Teil des Federelementes (7) in seinem die beiden Schenkel (13, 13.1) verbindenden Abschnitt ist.

3. Gurtspanner nach Anspruch 2, **dadurch gekennzeichnet, dass** das Federelement (7) an der Innenseite des Spannhebels (5, 5.1) im Bereich seines freien Endes geführt ist.

4. Gurtspanner nach Anspruch 3, **dadurch gekennzeichnet, dass** die zumindest eine Führung zum Führen des Federelementes (7) U-förmig ausgeführt und durch eine nach innen weisende, an dem Spannhebel (5, 5.1) angeformte Abkantung eine Lasche (19, 19.1) gebildet ist.

5. Gurtspanner nach einem der Ansprüche 1 bis 4, **dadurch gekennzeichnet, dass** der Riegel (9) in einer langlochartigen Durchbrechung (14) in einer Seitenwange (12) des Spannhebels (5, 5.1) geführt ist.

6. Gurtspanner nach Anspruch 5, **dadurch gekennzeichnet, dass** die der für die Riegelführung vorgesehene Durchbrechung (14) gegenüberliegende Seitenwange (12) des Spannhebels (5, 5.1) eine Federelementhalterung (15) aufweist.

7. Gurtspanner nach Anspruch 6, **dadurch gekennzeichnet, dass** die Federelementhalterung (15) durch eine aus der Seitenwange (12.1) des Spannhebels (5, 5.1) nach innen ausgestellte Lasche mit einer darin eingebrachten Federendaufnahme (21) zur Aufnahme des aus der Ebene der Federerstreckung abgewinkelten Federendes (16) bereitgestellt ist.

8. Gurtspanner nach Anspruch 7, **dadurch gekennzeichnet, dass** die Federelementhalterung (15) einen Abstand zur Innenseite des Spannhebels (5, 5.1) aufweist, der kleiner als die Länge des aus der Ebene abgewinkelten, in die Federendaufnahme (21) eingesetzten Federendes (16) des Federelementes (7) ist und dass die in der Federelementhalterung (15) befindliche Federendaufnahme (21) nach Art eines Labyrinths mit einer Einsetzöffnung (17) zum Einsetzen des abgewinkelten Federendes (16) ausgeführt ist.

9. Gurtspanner nach einem der Ansprüche 3 bis 8, **dadurch gekennzeichnet, dass** maximal ein Schenkel des Federelementes an der benachbarten Seitenwange des Spannhebels anliegt und sollte ein Schenkel des Federelementes an der benachbarten Seitenwange anliegen, es sich hierbei um denjenigen Schenkel handelt, mit dessen Ende das Federelement am Spannhebel festgelegt ist.

10. Gurtspanner nach einem der Ansprüche 1 bis 9, **dadurch gekennzeichnet, dass** die in einer Seitenwange (2, 2.1) des Unterteils (3, 3.1) angeordnete Riegelfalle (10) eine Riegelöffnung (11) aufweist, die durch eine in Richtung zur Riegelfalle (10) geneigte Stellschräge (22) begrenzt ist.

11. Gurtspanner nach einem der Ansprüche 1 bis 10, **dadurch gekennzeichnet, dass** das Unterteil (3, 3.1) und der Spannhebel (5, 5.1) aus einem Edelstahl hergestellt sind.

12. Gurtspanner nach einem der Ansprüche 1 bis 11, **dadurch gekennzeichnet, dass** der Spannhebel (5.1) mit Abstand zu seiner Schwenkachse (S) eine sich quer zu seiner Längserstreckung verlaufende, als Steg (24) ausgeführte erste Gurtumlenkung und das Unterteil (3.1) eine in Längserstreckung des Gurtspanners (1.1) in der Geschlossen-Stellung des Spannhebels (5.1) von der ersten Gurtumlenkung in Richtung der Schwenkachse (S) beabstandete zweite Gurtumlenkung aufweisen, wobei die zweite Gurtumlenkung als ein in dem von den Seitenwangen eingefassten Raum befindlicher und gegenüber dem Bodenteil (4.1) geneigt angeordneter Steg (26) ausgeführt ist, wobei eine Kante (29) des von der ersten Gurtumlenkung wegweisenden Seite dieses Steges (26) in der Geschlossen-Stellung des Spannhebels (5.1) ein Widerlager bildet, gegen die die um den Umlenksteg (24) des Spannhebels (5.1) herum geführte Gurtschlaufe (29, 30) gespannt wird.

13. Gurtspanner nach Anspruch 12, **dadurch gekennzeichnet, dass** die zweite, dem Unterteil (3.1) zugeordnete Gurtumlenkung durch eine Abkantung eines Abschnittes des Bodenteils (4.1) erstellt ist, wobei der Winkel (α), mit dem der Umlenksteg (26) des Unterteils (3.1) gegenüber der Ebene des Bodenteils (4.1) geneigt ist, zumindest 30 Grad beträgt, insbesondere mehr als 40 Grad beträgt und einen maximalen Anstellwinkel (α) von 75 Grad nicht überschreitet, insbesondere zwischen 55 Grad und 65 Grad beträgt.

14. Gurtspanner nach Anspruch 13, **dadurch gekennzeichnet, dass** der Umlenksteg (26) des Unterteils (3.1) durch einen Stanzvorgang, ausgehend von seiner in Richtung zur Schwenkachse (S) weisenden Oberseite des Bodenteils (4.1) in das Bodenteil (4.1) freigestellt ist.

## Claims

1. Belt tensioner comprising a lower part (3, 3.1), which has side pieces (2, 2.1), a tensioning lever (5, 5.1), which is connected in a pivotable manner to said lower part, and a locking device for locking the tensioning lever (5, 5.1) located in its closed position, which locking device has a spring element (7), arranged on the inner side of the tensioning lever (5, 5.1) and having a locking bolt (9), which projects from the tensioning lever (5, 5.1), in its closed position, in the direction of the adjacent side piece (2, 2.1) of the lower part (3, 3.1), and also has a catch (10), which is associated with said side piece (2, 2.1) and has a locking-bolt opening (11), the locking bolt (9) engaging in said catch (10) in the closed position of the belt tensioner (1) and being retained therein by the spring element (7) in order for an opening movement of the tensioning lever (5, 5.1) to be blocked, **characterized in that** the spring element (7) has a handle (18) which projects on the inner side of the tensioning lever (5, 5.1) beyond the free end of the latter, said free end being opposite the location where the tensioning lever is articulated on the lower part (3, 3.1), and is intended for adjusting the locking bolt (9) from the catch (10) into the locking-bolt opening (11) counter to the force of the spring element (7).

2. Belt tensioner according to Claim 1, **characterized in that** the spring element (7) is bent in a U-shaped manner, the locking bolt (9) is designed to protrude outwards at a free end of a limb (13) of the spring element (7), and the handle (18) is a part of the spring element (7) in the portion of the latter which connects to the two limbs (13, 13.1).

3. Belt tensioner according to Claim 2, **characterized in that** the spring element (7) is guided on the inner side of the tensioning lever (5, 5.1) in the region of the free end of the latter.

4. Belt tensioner according to Claim 3, **characterized in that** the at least one guide, for guiding the spring element (7), is of a U-shaped design and a lug (19, 19.1) is formed by an inwardly oriented angle portion formed on the tensioning lever (5, 5.1).

5. Belt tensioner according to one of Claims 1 to 4, **characterized in that** the locking bolt (9) is guided in a slot-like through-passage (14) in a side piece (12) of the tensioning lever (5, 5.1).

6. Belt tensioner according to Claim 5, **characterized in that** that side piece (12) of the tensioning lever (5, 5.1) which is located opposite the through-passage (14) provided for locking-bolt guidance has a spring-element holder (15).

7. Belt tensioner according to Claim 6, **characterized in that** the spring-element holder (15) is provided by a lug which protrudes inwards from the side piece (12.1) of the tensioning lever (5, 5.1) and has a spring-end mount (21) introduced therein for accommodating the spring end (16) which is angled out of the plane in which the spring extends.

8. Belt tensioner according to Claim 7, **characterized in that** the spring-element holder (15) is spaced apart from the inner side of the tensioning lever (5, 5.1) by a distance which is smaller than the length of the spring end (16) of the spring element (7), said spring end being angled from the plane and inserted into the spring-end mount (21), and **in that** the spring-end mount (21) located in the spring-element holder (15) is designed in the manner of a labyrinth with an insertion opening (17) for the insertion of the angled spring end (16).

9. Belt tensioner according to one of Claims 3 to 8, **characterized in that** a maximum of one limb of the spring element butts against the adjacent side piece of the tensioning lever and, if a limb of the spring element should butt against the adjacent side piece, the limb in question is the one of which the end is used to secure the spring element on the tensioning lever.

10. Belt tensioner according to one of Claims 1 to 9, **characterized in that** the catch (10), which is arranged in a side piece (2, 2.1) of the lower part (3, 3.1), has a locking-bolt opening (11), which is bounded by a positioning slope (22) inclined in the direction of the catch (10).

11. Belt tensioner according to one of Claims 1 to 10, **characterized in that** the lower part (3, 3.1) and the tensioning lever (5, 5.1) are produced from a stainless steel.

12. Belt tensioner according to one of Claims 1 to 11, **characterized in that** the tensioning lever (5.1), at a distance from its pivot axis (S), has a first belt-deflection means which runs transversely to the longitudinal extent of the tensioning lever and is formed as a crosspiece (24) and the lower part (3.1) has a second belt-deflecting means which, in the closed position of the tensioning lever (5.1), is spaced apart from the first belt-deflecting means, along the longitudinal extent of the belt tensioner (1.1), in the direction of pivot axis (S), wherein the second belt-deflecting means is designed in the form of a crosspiece (26) which is located in the space surrounded by the side pieces and is inclined in relation to the base part (4.1), wherein, in the closed position of the tensioning lever (5.1), an edge (29) of that side of said crosspiece (26) which is oriented away from the first belt-deflecting means forms an abutment, against which is tensioned the belt loop (29, 30) which is guided around the deflecting crosspiece (24) of the tensioning lever (5.1).

13. Belt tensioner according to Claim 12, **characterized in that** the second belt-deflecting means, which is assigned to the lower part (3.1), is produced by a section of the base part (4.1) being angled, wherein the angle (α) by which the deflecting crosspiece (26) of the lower part (3.1) is inclined in relation to the plane of the base part (4.1) is at least 30 degrees, in particular more than 40 degrees, and does not exceed a maximum positioning angle (α) of 75 degrees, in particular is between 55 degrees and 65 degrees.

14. Belt tensioner according to Claim 13, **characterized in that** the deflecting crosspiece (26) of the lower part (3.1) is made by a punching operation into the base part (4.1) starting from the upper side of the base part (4.1), said upper side being oriented in the direction of the pivot axis (S).

## Revendications

1. Tendeur de sangle comprenant une partie inférieure (3, 3.1) présentant des joues latérales (2, 2.1), un levier de tension (5, 5.1) relié à celle-ci de façon pivotante ainsi qu'un système de verrouillage permettant de verrouiller le levier de tension (5, 5.1) se trouvant dans sa position fermée, système de verrouillage qui comporte un élément de ressort (7) disposé sur le côté intérieur du levier de tension (5, 5.1) avec un verrou (9) dépassant du levier de tension (5, 5.1) dans sa position fermée en direction de la joue latérale voisine (2, 2.1) de la partie inférieure (3, 3.1) ainsi qu'un cran de verrouillage (10) associé à cette joue latérale (2, 2.1) avec une ouverture de verrou (11), cran de verrouillage (10) dans lequel le verrou (9) s'engage dans la position fermée du tendeur de sangle (1) et y est maintenu par l'élément de ressort (7) pour le blocage d'un mouvement d'ouverture du levier de tension (5, 5.1), **caractérisé en ce que** l'élément de ressort (7) présente une poignée (18) dépassant sur le côté intérieur du levier de tension (5, 5.1) au-delà de son extrémité libre opposée à l'articulation du levier de tension sur la partie inférieure (3, 3.1) pour le déplacement du verrou (9) hors du cran de verrouillage (10) dans l'ouverture de verrou (11) contre la force de l'élément de ressort (7).

2. Tendeur de sangle selon la revendication 1, **caractérisé en ce que** l'élément de ressort (7) est cintré en forme de U, le verrou (9) est réalisé à une extrémité libre d'une branche (13) de l'élément de ressort (7) déviée vers l'extérieur et la poignée (18) est une partie de l'élément de ressort (7) dans sa partie reliant les deux branches (13, 13.1).

3. Tendeur de sangle selon la revendication 2, **caractérisé en ce que** l'élément de ressort (7) est guidé sur le côté intérieur du levier de tension (5, 5.1) dans la région de son extrémité libre.

4. Tendeur de sangle selon la revendication 3, **caractérisé en ce que** ledit au moins un guide pour guider l'élément de ressort (7) est réalisé en forme de U et est formé par une patte repliée (19, 19.1) orientée vers l'intérieur formée sur le levier de tension (5, 5.1).

5. Tendeur de sangle selon l'une quelconque des revendications 1 à 4, **caractérisé en ce que** le verrou (9) est guidé dans une découpe allongée (14) dans une joue latérale (12) du levier de tension (5, 5.1).

6. Tendeur de sangle selon la revendication 5, **caractérisé en ce que** la joue latérale (12) du levier de tension (5, 5.1) opposée à la découpe (14) prévue pour le guidage de verrou présente un dispositif de maintien (15) de l'élément de ressort.

7. Tendeur de sangle selon la revendication 6, **caractérisé en ce que** le dispositif de maintien (15) de l'élément de ressort est constitué par une patte déviée vers l'intérieur hors de la joue latérale (12.1) du levier de tension (5, 5.1) avec un logement de l'extrémité de ressort (21) pratiqué dans celle-ci pour le logement de l'extrémité de ressort (16) coudée hors du plan de l'extension du ressort.

8. Tendeur de sangle selon la revendication 7, **caractérisé en ce que** le dispositif de maintien (15) de l'élément de ressort présente une distance par rapport au côté intérieur du levier de tension (5, 5.1), qui est plus petite que la longueur de l'extrémité de ressort (16) de l'élément de ressort (7) coudée hors du plan et introduite dans le logement d'extrémité de ressort (21) et **en ce que** le logement d'extrémité de ressort (21) se trouvant dans le dispositif de maintien (15) de l'élément de ressort est réalisé à la manière d'un labyrinthe avec une ouverture d'introduction (17) pour l'introduction de l'extrémité de ressort coudée (16).

9. Tendeur de sangle selon l'une quelconque des revendications 3 à 8, **caractérisé en ce qu'**au maximum une branche de l'élément de ressort s'applique sur la joue latérale voisine du levier de tension et si une branche de l'élément de ressort devait s'appliquer sur la joue latérale voisine, ce serait ici la branche avec l'extrémité de laquelle l'élément de ressort est fixé au levier de tension.

10. Tendeur de sangle selon l'une quelconque des revendications 1 à 9, **caractérisé en ce que** le cran de verrouillage (10) disposé dans une joue latérale (2, 2.1) de la partie inférieure (3, 3.1) présente une ouverture de verrou (11), qui est limitée par une rampe de réglage (22) inclinée en direction du cran de verrouillage (10).

11. Tendeur de sangle selon l'une quelconque des revendications 1 à 10, **caractérisé en ce que** la partie inférieure (3, 3.1) et le levier de tension (5, 5.1) sont fabriqués en un acier allié.

12. Tendeur de sangle selon l'une quelconque des revendications 1 à 11, **caractérisé en ce que** le levier de tension (5.1) présente à distance de son axe de pivotement (S) une première déviation de sangle réalisée sous la forme d'une entretoise (24) et s'étendant transversalement à son extension longitudinale et la partie inférieure (3.1) présente une deuxième déviation de sangle distante de la première déviation de sangle dans la direction de l'axe de pivotement (S) dans la direction longitudinale du tendeur de sangle (1.1) dans la position fermée du levier de tension (5.1), dans lequel la deuxième déviation de sangle est réalisée sous la forme d'une entretoise (26) se trouvant dans l'espace encadré par les joues latérales et en position inclinée par rapport à la partie de fond (4.1), dans lequel une arête (29) du côté de cette entretoise (26) détourné de la première déviation de sangle forme dans la position fermée du levier de tension (5.1) un contre-appui contre lequel la boucle de sangle (29, 30) menée autour de l'entretoise de déviation (24) du levier de tension (5.1) est tendue.

13. Tendeur de sangle selon la revendication 12, **caractérisé en ce que** la deuxième déviation de sangle associée à la partie inférieure (3.1) est formée par un pliage d'une partie de la partie de fond (4.1), dans lequel l'angle (α), dont l'entretoise de déviation (26) de la partie inférieure (3.1) est inclinée par rapport au plan de la partie de fond (4.1), vaut au moins 30 degrés, en particulier vaut plus de 40 degrés et ne dépasse pas un angle d'inclinaison (α) maximal de 75 degrés, et il vaut en particulier entre 55 degrés et 65 degrés.

14. Tendeur de sangle selon la revendication 13, **caractérisé en ce que** l'entretoise de déviation (26) de la partie inférieure (3.1) est dégagée dans la partie de fond (4.1) par une opération d'estampage à partir de son côté supérieur de la partie de fond (4.1) orienté en direction de l'axe de pivotement (S).
